(19) Europäisches Patentamt / European Patent Office / Office européen des brevets

(11) **EP 4 645 237 A1**

(12) **EUROPEAN PATENT APPLICATION**
published in accordance with Art. 153(4) EPC

(43) Date of publication:
05.11.2025 Bulletin 2025/45

(21) Application number: 23909903.9

(22) Date of filing: 29.11.2023

(51) International Patent Classification (IPC):
$G06T\ 17/00^{(2006.01)}$   $G06V\ 10/26^{(2022.01)}$
$G06V\ 10/30^{(2022.01)}$   $G06V\ 10/80^{(2022.01)}$
$G06V\ 10/82^{(2022.01)}$

(52) Cooperative Patent Classification (CPC):
G06T 17/00; G06V 10/26; G06V 10/30;
G06V 10/80; G06V 10/82

(86) International application number:
PCT/CN2023/135137

(87) International publication number:
WO 2024/139973 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.12.2022 CN 202211737363

(71) Applicant: Shining 3D Tech Co., Ltd.
Hangzhou, Zhejiang 311258 (CN)

(72) Inventors:
• WANG, Jialei
Hangzhou, Zhejiang 311258 (CN)
• JIANG, Tengfei
Hangzhou, Zhejiang 311258 (CN)
• ZHANG, Jian
Hangzhou, Zhejiang 311258 (CN)
• ZHAO, Xiaobo
Hangzhou, Zhejiang 311258 (CN)

(74) Representative: Metida
Gyneju str. 16
01109 Vilnius (LT)

(54) **THREE-DIMENSIONAL RECONSTRUCTION METHOD AND APPARATUS, ELECTRONIC DEVICE, AND COMPUTER-READABLE STORAGE MEDIUM**

(57) The present application discloses a three-dimensional reconstruction method and apparatus, an electronic device, and a computer-readable storage medium. The three-dimensional reconstruction method comprises: acquiring a first depth image to be reconstructed of a target scene and an RGB image corresponding to said first depth image; preprocessing said first depth image to obtain a second depth image to be reconstructed; on the basis of said second depth image and the RGB image, performing semantic segmentation on said second depth image, and determining a target object area and a non-target object area in said second depth image; processing said second depth image to remove the non-target object area in said second depth image; and performing three-dimensional reconstruction by using said processed second depth image to obtain a three-dimensional model of a target object. The accuracy of semantic segmentation in the three-dimensional reconstruction process of a target object can be improved, thereby improving the efficiency of three-dimensional reconstruction of the target object and the accuracy of the reconstructed three-dimensional model.

Fig. 2

**Description**

**TECHNICAL FIELD**

The present application relates to a field of three-dimensional reconstruction, and in particular to a three-dimensional reconstruction method, an apparatus, an electronic device and a computer-readable storage medium.

**BACKGROUND**

A three-dimensional reconstruction is a process of establishing a mathematical model suitable for a computer representation and a processing of a three-dimensional object, and reconstructing three-dimensional information based on a single-view or multiple-view images of the three-dimensional object. In some scenes, a presence of noise in collected images of the three-dimensional object may affect an accuracy of a reconstructed three-dimensional model, and a reconstruction speed.

Taking an oral medical field as an example, an application of a three-dimensional reconstruction can be three-dimensional reconstruction of a model of teeth and gums based on multiple views of the teeth and gums in a mouth. When collecting two-dimensional images of the teeth and gums from multiple views, the two-dimensional images acquired from certain viewing angles may include a lot of noise information, such as non-rigid areas such as lips and cheeks, or temporary medical items such as medical gloves and a dental mirror. These noise information may affect a three-dimensional reconstruction process, making the three-dimensional reconstruction process of teeth and gums slower and less efficient, and the accuracy of the reconstructed three-dimensional model is also lower.

**SUMMARY**

In view of the above technical problems, the present application provides a three-dimensional reconstruction method, an apparatus, an electronic device and a computer-readable storage medium. The technical solutions are as follows:

According to a first aspect of the present application, a three-dimensional reconstruction method is provided, the method comprising:

Acquire a first depth image to be reconstructed of a target scene and a red-green-blue (RGB) image corresponding to the first depth image to be reconstructed;

Preprocessing the first depth image to be reconstructed to obtain a second depth image to be reconstructed;

Determining an area of a target object and an area of a non-target object in the second depth image to be reconstructed by performing a semantic segmentation on the second depth image to be reconstructed, based on the second depth image to be reconstructed and the RGB image;

Processing the second depth image to be reconstructed to remove the area of the non-target object in the second depth image to be reconstructed;

Performing a three-dimensional reconstruction using the second depth image to be reconstructed that has been processed to obtain a three-dimensional model of the target object.

According to a second aspect of the present application, a three-dimensional reconstruction apparatus is provided, the apparatus comprising:

An acquisition unit, configured to acquire a first depth image to be reconstructed of a target scene and an RGB image corresponding to the first depth image to be reconstructed;

A preprocessing unit, configured to preprocess the first depth image to be reconstructed to obtain a second depth image to be reconstructed;

A semantic segmentation unit, configured to determine an area of a target object and an area of a non-target object in the second depth image to be reconstructed by performing a semantic segmentation on the second depth image to be reconstructed based on the second depth image to be reconstructed and the RGB image;

A processing unit, configured to process the second depth image to be reconstructed to remove the area of the non-target object in the second depth image to be reconstructed;

A three-dimensional reconstruction unit, configured to perform a three-dimensional reconstruction using the second depth image to be reconstructed that has been processed to obtain a three-dimensional model of the target object.

According to a third aspect of the present application, an electronic device is provided, the electronic device comprising:

A processor;

A storage device, configured to store instructions executable by the processor;

The processor is configured to implement the method as described in the first aspect.

According to a fourth aspect of the present application, a computer-readable storage medium is provided, on which a computer program is stored, and when the computer program is executed by a processor, the steps in the method described in the first aspect are implemented.

The technical solution provided by the present application preprocesses the depth image of the target scene that is obtained, combines the preprocessed depth image with its corresponding RGB image for a semantic segmentation, and under a guidance of the RGB image and when there is a relatively obvious step difference between objects in the depth image, accurately segments the area of the target object and the area of the non-target object in the depth image to remove the area of the non-target object in the depth image, thereby accurately eliminating noise information included in the depth image, and obtaining a three-dimensional model of the target object by performing a three-dimensional reconstruction for the target object based on the depth image which includes the segmented target object area and has eliminated the noise information.

It should be understood that the foregoing general description and the following detailed description are exemplary and explanatory only and are not restrictive of the present application.

## BRIEF DESCRIPTION OF THE DRAWINGS

In order to more clearly illustrate the technical solutions in the embodiments of the present application or related technologies, the drawings required for use in the embodiments or related technical descriptions are briefly introduced below. Obviously, the drawings described below are only some embodiments described in the present application. For the skilled in the art, other drawings can also be obtained based on these drawings.

FIG. 1 is a schematic diagram of a three-dimensional reconstruction scene of the present application;

FIG. 2 is a schematic diagram of a flow chart of a three-dimensional reconstruction method according to an embodiment of the present application;

FIG. 3 is a schematic diagram of a depth image acquired by a structured light scanner according to an embodiment of the present application;

FIG. 4 is a schematic diagram of preprocessing a depth image according to an embodiment of the present application;

FIG. 5 is a schematic diagram of a process of training a semantic segmentation model according to an embodiment of the present application;

FIG. 6 is a schematic diagram of a structure of a semantic segmentation model according to an embodiment of the present application;

FIG. 7 is a schematic diagram of a structure of a three-dimensional reconstruction apparatus according to an embodiment of the present application;

FIG. 8 is a schematic diagram of a structure of an electronic device according to an embodiment of the present application.

## DETAILED DESCRIPTION

In order to enable those skilled in the art to better understand the technical solutions in the present application, the technical solutions in the embodiments of the present application will be described in detail below in conjunction with the drawings in the embodiments of the present application. Obviously, the described embodiments are only part of the embodiments of the present application, not all of the embodiments. Based on the embodiments in the present application, all other embodiments obtained by the skilled in the art should fall within the scope of protection of this application.

First, a scene of three-dimensional reconstruction is introduced. A three-dimensional reconstruction is a process of establishing a mathematical model suitable for a computer representation and a processing of a three-dimensional object, and reconstructing three-dimensional information based on single-view or multi-view images of the three-dimensional object. The three-dimensional reconstruction can be applied to a variety of scenes. The following takes a scene of an oral cavity as an example to illustrate an application of three-dimensional reconstruction in teeth and gums in the oral cavity:

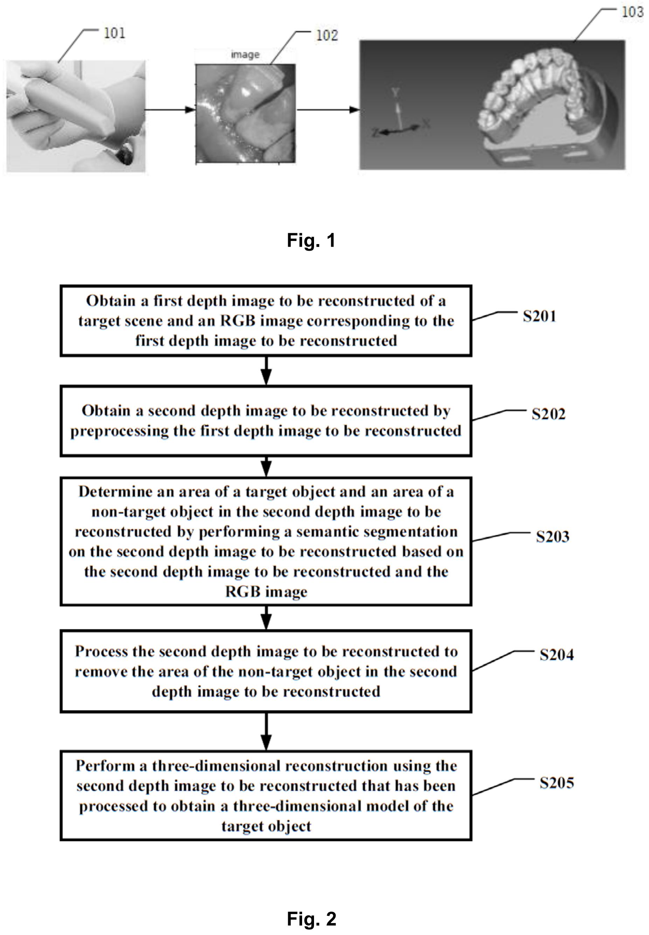

Please refer to FIG. 1. In a field of oral medicine, the application of three-dimensional reconstruction can be to perform a three-dimensional reconstruction of a model of teeth and gums based on multiple views of teeth and gums in the mouth. For example, when two-dimensional images of a patient's teeth and gums are collected from multiple views by an oral scanner 101, a plurality of two-dimensional images 102 of teeth and gums can be obtained. Based on the plurality of two-dimensional images 102 of teeth and gums, a three-dimensional reconstruction of teeth and gums can be performed to obtain a three-dimensional model 103 of teeth and gums. Since the two-dimensional images 102 collected at certain viewing angles may include a lot of noise information, such as non-rigid areas such as lips and cheeks, or temporary medical items such as medical gloves and a dental mirror. These noise information may affect a three-dimensional reconstruction process, so a speed and an efficiency of the three-dimensional reconstruction process of teeth and gums are low, and the accuracy of the reconstructed three-dimensional model is also low. Therefore, a semantic segmentation is introduced in the three-dimensional reconstruction process of teeth and gums to remove the noise information in the two-dimensional images of teeth and gums as much as possible, and improve the speed and efficiency of the three-dimensional reconstruction process of teeth and gums. However, currently, since the semantic segmentation of the two-dimensional image of teeth and gums is only based on RGB images of teeth and gums, and the RGB images are easily affected by lighting, image distortion, etc., and buccal and gingival textures are similar in the RGB images of teeth and gums, and a segmentation process is difficult to distinguish, so the accuracy of semantic segmentation is low, which makes the efficiency of three-dimensional reconstruction of teeth and gums and the accuracy of the reconstructed three-dimensional model still low.

It should be noted that, in the above-mentioned scene related to oral cavity, the three-dimensional reconstruction of teeth and gums is an exemplary description. In actual applications, in addition to the scene related to oral cavity, the embodiments of the present application can also be applied to the three-dimensional reconstruction of other scenes, such as the three-dimensional reconstruction scene of scanning an inside of an ear through an in-ear scanner, the three-dimensional reconstruction scene of scanning a face through a facial scanner, etc. There is no specific limitation on the three-dimensional reconstruction scene of the application of the embodiments of the present application.

In view of the above problems, the present application provides a three-dimensional reconstruction method to improve the accuracy of the semantic segmentation in the three-dimensional reconstruction process of the target object, thereby improving the efficiency of the three-dimensional reconstruction of the target object and the accuracy of the reconstructed three-dimensional model. As shown in FIG. 2, the method includes the following steps S201 -S205:

S201, a first depth image to be reconstructed of a target scene and an RGB image corresponding to the first depth image to be reconstructed are obtained.

Taking the target scene as the scene related to oral cavity as an example, since it is necessary to obtain a depth image with a high-precision at a low cost in the scene related to oral cavity, the depth image can be obtained by structured light. Specifically, the depth image can be obtained by a structured light scanner or a structured light sensor. There is no limitation on a method of using the structured light to obtain the depth image. It is worth noting that in addition to the method of using the structured light to obtain the depth image I in the scene related to oral cavity, the embodiment of the present application does not exclude an acquisition of depth images by other methods such as lidar, TOF, etc. in other scenes in actual applications. There is no specific limitation on the method of acquiring the depth image.

S202, a second depth image to be reconstructed is obtained by preprocessing the first depth image to be reconstructed.

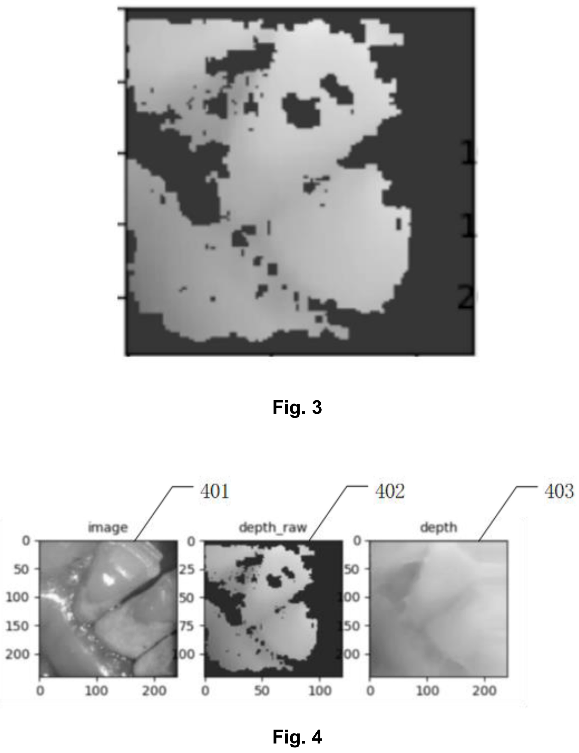

Please refer to FIG. 3, which takes a scene of using a structured light scanner to scan the oral cavity to perform a three-dimensional reconstruction of teeth and gums as an example to illustrate a necessity of preprocessing a reconstructed depth image: first, the structured light scanner is easily affected by a material of an object. Specifically, when the depth images to be reconstructed of teeth and gums are collected by a structured light scanner, the structured light scanner can obtain depth information of pixel points in the depth image to be reconstructed. Since the teeth in the oral cavity are semi-transparent, highly reflective, and have slits, a scanning of the teeth is easily affected by factors such as lighting and reflection. In addition, a color and a texture of the gums and the non-target object (such as a buccal side of a soft tissue) are similar, which makes it difficult for the structured light scanner to distinguish different objects during scanning. Therefore, the depth image to be reconstructed collected by the structured light scanner usually has a large number of holes, that is, pixels without depth values, and an integrity is poor. Secondly, an acquisition of reconstructed depth images is also affected by an environment and a distance. For example, the acquisition of depth images in an autonomous driving scene is compared with that in scene related to oral cavity: in autonomous driving scene, the environment in which depth images are acquired is relatively wide, an object distance is longer, and a camera depth of field is larger, while in scene related to oral cavity, the environment in which depth images are acquired through the structured light scanner is relatively narrow, an object distance is shorter, and a camera depth of field is smaller, resulting in different effects and imaging methods of the data acquired in the autonomous driving scene and the scene related to oral cavity. The data in the depth image acquired in the autonomous driving scene is relatively sparse, but there may be no large blocks of depth missing, while the data in the depth image acquired in the scene related to oral cavity is relatively dense, but there may be a large number of holes, i.e., pixels without depth values.

In summary, it can be imagined that when the depth image to be reconstructed is obtained by structured light in the scene related to oral cavity, if the depth image to be reconstructed with missing depth values is directly combined with the corresponding RGB image for a semantic segmentation, a data mismatch may occur. For example, teeth that actually exist on the RGB image are missing on the depth image to be reconstructed. In order to enable the depth image to be reconstructed obtained by the structured light scanner to be combined with the corresponding RGB image for the semantic segmentation, the first depth image to be reconstructed needs to be preprocessed to obtain the second depth image to be reconstructed.

In order to implement preprocessing of the first depth image to be reconstructed, multiple preprocessing methods may be selected. The embodiment of the present application provides one of the methods for implementing preprocessing of the first depth image to be reconstructed, which may include one or more of the following:

A pixel value range of the first depth image to be reconstructed is adjusted according to a color scale range of the RGB image; noise pixels of the first depth image to be reconstructed are removed according to a depth range of a depth camera used to obtain the first depth image to be reconstructed; and the first depth image to be reconstructed is inpainted using an interpolation method.

As an example, one method for adjusting the pixel value range of the first depth image to be reconstructed according to the color scale range of the RGB image may be to normalize depth information of the first depth image to be reconstructed and the RGB image. For example, if the color scale range of the RGB image is [0-255], the pixel value range of the first depth image to be reconstructed may be adjusted according to the following formula (1):

$$value\ 2 = (value\ 1 - min\_depth)/((max\_detph - min\_depth)/255.0) \qquad (1)$$

Among them, "value 1" represents a pixel value that is actually collected, and "value 2" represents an adjusted pixel value;

The "min_depth" represents a minimum pixel value of the first depth image to be reconstructed;

The "max_detph" represents a maximum pixel value of the first depth image to be reconstructed;

The depth information of the first depth image to be reconstructed can be normalized with the RGB image by the formula (1), so that the pixel value range of the first depth image to be reconstructed is constrained to [0-255], which is consistent with the RGB image, and is convenient for a subsequent combined processing. It is worth noting that the above adjustment method and the adjustment formula are only exemplary, and other adjustment methods or adjustment formulas are not excluded in actual applications, and are not specifically limited to this.

As an example, the noise pixel may be a noise point or an outlier.

As an example, the interpolation method may be a bilinear interpolation.

Please refer to FIG. 4, which is exemplary showing the above-mentioned preprocessing method. Taking the scene related to oral cavity as an example, 401 illustrates the RGB image of teeth and gums and a corresponding range, 402 illustrates the depth image to be reconstructed without preprocessing which is corresponding to the RGB image and illustrates a corresponding range , and 403 illustrates the depth image to be reconstructed after the above-mentioned preprocessing.

It is worth noting that the above-mentioned method of preprocessing the depth image is only exemplarily explained. In practical applications, the preprocessing method can be flexibly selected according to needs of a designer and is not limited to this.

S203, an area of a target object and an area of a non-target object in the second depth image to be reconstructed are determined by performing a semantic segmentation on the second depth image to be reconstructed based on the second depth image to be reconstructed and the RGB image;

As an example, the target scene may be the scene related to oral cavity, the target object may be teeth and gums, the non-target object may be soft tissues or movable objects, the soft tissues may be lips and cheeks, and the movable object may be a medical endoscope or a glove. It is worth noting that in actual applications, the target scene may be other scenes such as ear scanning or facial scanning in addition to the scene related to oral cavity, and the target object may be other objects in addition to teeth and gums in the oral cavity, and there is no limitation on this; the non-target object may be other objects in addition to the soft tissues or the movable objects. In addition to lips and cheeks, the soft tissue may also be a tongue, a gum, a loose gum or other soft tissues. In addition to the medical endoscope and the glove, the movable object may also be other medical instruments or medical supplies such as a medicine, a cotton roll or a dental suction device, or a finger. There is no specific limitation on the above-mentioned target objects and non-target objects.

In the related art, the semantic segmentation of an image is usually performed based only on the RGB image of the target scene, and textures between objects in RGB image are relatively similar, which can easily lead to misidentification. For example, in the scene related to oral cavity, a buccal side as a non-target object and the gums as a target object may be adhered, and the two are highly similar and difficult to distinguish. In addition, a segmentation result of the RGB image is easily affected by factors such as an illumination and a image distortion, resulting in a low segmentation accuracy. To address this problem, the depth image is introduced in an embodiment of the present application, and the semantic segmentation is performed in combination with the RGB image to improve the accuracy of semantic segmentation. In order to achieve the semantic segmentation of the second depth image to be reconstructed, a variety of segmentation methods can be selected, and an embodiment of the present application provides one of the segmentation methods that can achieve an accurate semantic segmentation of the second depth image to be reconstructed:

A feature extraction is performed on the RGB image and a feature extraction is performed on the second depth image to be reconstructed, and a feature map of the RGB image and a feature map of the second depth image to be reconstructed are obtained; the feature map of the RGB image and the feature map of the second depth image to be reconstructed are fused at multiple levels to obtain a fused feature map; the area of the target object and the area of the non-target object are determined based on the fused feature map, so that features that are extracted have multiple scales, thereby improving a segmentation effect.

It is worth noting that the above-mentioned method of semantically segmenting the second depth image to be reconstructed is only an exemplary display. In practical applications, the method of semantically segmenting the second depth image to be reconstructed can be flexibly selected according to the needs of the designer and is not limited to this.

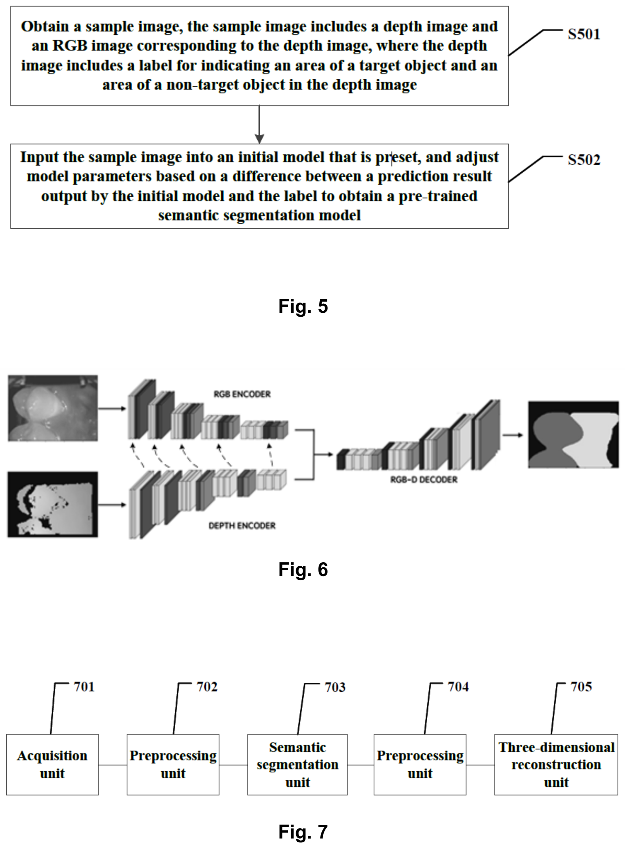

Please refer to FIG. 5. In order to further improve the accuracy of semantic segmentation of the second depth image to be reconstructed, the RGB image corresponding to the depth image to be reconstructed can be combined to achieve an accurate segmentation of the second depth image to be reconstructed. As an example, the area of the target object and the area of the non-target object can be obtained by inputting the second depth image to be reconstructed and the corresponding RGB image into a pre-trained semantic segmentation model. The pre-trained semantic segmentation model can be obtained in the following way:

S501, a sample image is obtained, where the sample image includes a depth image and an RGB image corresponding to the depth image, where the depth image includes a label indicating an area of a target object and an area of a non-target object in the depth image;

S502, the sample image is input into an initial model that is preset, and model parameters are adjusted based on a difference between a prediction result output by the initial model and the label to obtain the pre-trained semantic segmentation model.

As an example, in order to reduce an inference time and a model size of the above-mentioned model and achieve a purpose of pruning the model to meet a real-time and accuracy requirements, after the initial model has been trained, a weight of each channel of the initial model can be determined based on the model parameters of the initial model; a designated channel of the initial model is deleted according to the weight of each channel to obtain the above-mentioned trained semantic segmentation model. It is worth noting that the above-mentioned method of reducing the model inference time and the model size is only exemplarily explained. In actual applications, the method of reducing the model inference time and model size can be flexibly selected according to the needs of the designer, and there is no limitation on this.

As an example, the designated channel may be a channel whose weight is less than or equal to a preset threshold, or a channel whose weight is the smallest among the weights of various channels, or a channel of other weights, which is not limited.

In order to ensure that the above model still meets an accuracy requirement after deleting the channel, as an example, the model parameters of the initial model after deleting the designated channel can be adjusted through a model fine-tuning to obtain the above-mentioned trained semantic segmentation model. It is worth noting that the above-mentioned method of improving the accuracy of the model is only exemplarily explained. In actual applications, the method of improving the accuracy of the model can be flexibly selected according to the needs of the designer, and there is no limitation on this.

In order to further accelerate model reasoning and reduce a time consumption of the model reasoning, it is required that a time consumption of a semantic segmentation model under the single view is as short as possible to further meet a real-time requirement. As an example, the pre-trained semantic segmentation model can be accelerated by TensorRT so that it can run at a high speed on a NVIDIA graphics card hardware device, ensuring a real-time performance of a three-dimensional reconstruction. It is worth noting that the above-mentioned method of accelerating the model is only exemplarily explained. In actual application, the acceleration method can be flexibly selected according to the needs of the designer and is not limited to this.

As an example, a Tensor RT is a C++ library that facilitates a high-performance inference on a NVIDIA graphics processing unit (GPU). It is designed to work in a complementary way with a training framework such as a TesnsorFlow, a Caffe, a Pytorch, and a MXNet, enabling fast and efficient network inference on GPU.

Some current training frameworks, such as a TensorFlow, have integrated the TensorRT, so it can be applied to the reasoning in an acceleration framework of the embodiment of the present application. In addition, the TensorRT can be used as a library in a user application, which includes a parser for importing an existing model from the Caffe, a ONNX or the TensorFlow, and for building models programmatically (such as C++ or Python API).

Please refer to FIG. 6, as an example, a structure adopted by the semantic segmentation model can be a two-stream deep neural network, which can be divided into two parts: an encoding part and a decoding part. The encoding part can include two branches, which respectively extract features from the RGB image and extract features from the second depth image to be reconstructed to obtain the feature map of the RGB image and the feature map of the second depth image to be reconstructed, and fuse the feature map of the RGB image and the feature map of the second depth image to be reconstructed at multiple levels to obtain a fused feature map. The decoding part includes determining the area of the target object and the area of the non-target object based on the fused feature map, thereby ensuring that features of the RGB image and features of the second depth image to be reconstructed at multiple scales can be effectively fused and transmitted, so that the extracted features can have multiple scales, thereby improving the segmentation effect.

As an example, the above network can output different categories corresponding to each pixel in the second depth image to be reconstructed, thereby segmenting the area of the target object and the area of the non-target object, and obtaining a semantic segmentation mask image with a same scale as the second depth image to be reconstructed. According to the semantic segmentation mask image, the area of the non-target object under the single view can be eliminated, thereby improving a robustness of a three-dimensional modeling.

As an example, the decoding part may use multiple cascaded deconvolution operations for upsampling to ensure that a size of the semantic segmentation mask image outputted finally is consistent with the second depth image to be reconstructed.

As an example, a VGG can be used as a backbone network in the above network structure.

As an example, during an encoding process, a maximum pooling can be used to downsample the feature map of the RGB image and the feature map of the depth image corresponding to the RGB image after the above preprocessing.

As an example, multiple dropout layers can be introduced in the structure of the above network to prevent overfitting.

As an example, the dropout layer can be as implemented follows:

Setting a probability of dropout for each neural network layer; removing some neurons according to corresponding probabilities and start training, updating parameters of neurons and weights that have not been removed and retain them; after the updating of the parameters is completed, removing some neurons again according to corresponding probabilities and start training. If the neuron currently used for training has been trained in a first time, continue to update the parameters of the neuron; and if the parameters of the neuron which is removed in a second time has been updated in the first time, keep its weight without modification until it is not deleted when the dropout is performed for the nth batch.

S204, an image to be reconstructed is processed to remove an area of a non-target object in the image to be reconstructed;

S205, a three-dimensional reconstruction is performed using the image to be reconstructed that has been processed to obtain a three-dimensional model of the target object.

The following is an introduction to a specific application scenario of an embodiment of the present application:

An RGB image and a corresponding depth image scanned by the structured light scanner are obtained;

The RGB image is processed by a pre-trained mask region convolutional neural network to determine areas of target objects on the RGB image and category information and mask information of each area of the target object; the category information of the area of the target object includes a category value of each preset category corresponding to the area of the target object, and the mask information of the area of the target object includes an mask image of each preset category corresponding to the area of the target object, and the preset category includes a positive sample category and a negative sample category; the mask information of the area of the target object is generated through an operation of a fully connected convolutional neural network in the mask region convolutional neural network;

According to the category information and the mask information of the area of the target object, the corresponding depth image is updated;

Based on the updated depth image, a three-dimensional model of the target object is constructed.

Corresponding to the above method embodiment, the present application also provides a three-dimensional reconstruction apparatus, as shown in FIG. 7, the apparatus may include:

An acquisition unit 701, configured to acquire a first depth image to be reconstructed of a target scene and an RGB image corresponding to the first depth image to be reconstructed;

A preprocessing unit 702, configured to preprocess the first depth image to be reconstructed to obtain a second depth image to be reconstructed;

A semantic segmentation unit 703, configured to perform a semantic segmentation on the second depth image to be reconstructed based on the second depth image to be reconstructed and the RGB image, and determine an area of a target object and an area of a non-target object in the second depth image to be reconstructed;

A processing unit 704, configured to process the second depth image to be reconstructed to remove the area of the non-target object in the second depth image to be reconstructed;

A three-dimensional reconstruction unit 705 configured to perform a three-dimensional reconstruction using the second depth image to be reconstructed that has been processed to obtain a three-dimensional model of the target object.

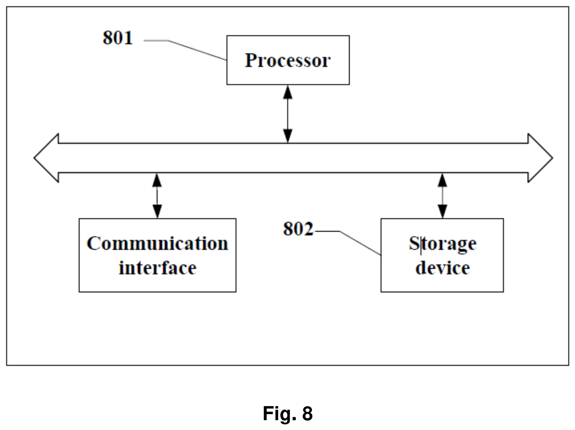

The present application also provides an electronic device, as shown in FIG. 8, the electronic device includes:

A processor 801;

A storage device 802 for storing instructions executable by a processor;

The processor 801 is configured to implement the three-dimensional reconstruction method described in any one of the above embodiments.

The present application also provides a computer-readable storage medium having a computer program stored thereon, and when the computer program is executed by a processor, the three-dimensional reconstruction method described in any one of the above embodiments is implemented.

The above is only a specific implementation of the present application. It should be pointed out that for the ordinary skilled in the art, several improvements and modifications can be made without departing from the principles of the present application. These improvements and modifications should also be regarded as the scope of protection of the present application.

Industrial Applicability

The present application relates to the field of three-dimensional reconstruction, and specifically discloses the three-dimensional reconstruction method, including: obtaining a first depth image to be reconstructed of a target scene and an RGB image corresponding to the first depth image to be reconstructed; preprocessing the first depth image to be reconstructed to obtain a second depth image to be reconstructed; based on the second depth image to be reconstructed and the RGB image, performing a semantic segmentation on the second depth image to be reconstructed to determine an area of a target object and an area of a non-target object in the second depth image to be reconstructed; processing the second depth image to be reconstructed to remove the area of the non-target object in the second depth image to be reconstructed; performing a three-dimensional reconstruction using the second depth image to be reconstructed that has been processed to obtain a three-dimensional model of the target object, which can improve the accuracy of semantic segmentation in the three-dimensional reconstruction process of the target object, thereby improving the efficiency of three-dimensional reconstruction of the target object and the accuracy of the reconstructed three-dimensional model, so the present application has industrial applicability.

**Claims**

1. A three-dimensional reconstruction method, **characterized in that** the three-dimensional reconstruction method comprises:

   obtaining a first depth image to be reconstructed of a target scene and a red-green-blue (RGB) image corresponding to the first depth image to be reconstructed;
   obtaining a second depth image to be reconstructed by preprocessing the first depth image to be reconstructed;
   determining an area of a target object and an area of a non-target object in the second depth image to be reconstructed by performing a semantic segmentation on the second depth image to be reconstructed based on the second depth image to be reconstructed and the RGB image;
   removing the area of the non-target object in the second depth image to be reconstructed by processing the second depth image to be reconstructed;
   obtaining a three-dimensional model of the target object by performing a three-dimensional reconstruction using the second depth image to be reconstructed that has been processed.

2. The method according to claim 1, wherein the target scene is a scene related to an oral cavity, the target object comprises teeth and gums, the non-target object comprises soft tissues or movable objects, the soft tissues comprise lips and cheeks, and the movable objects comprise a medical endoscope and a glove.

3. The method according to claim 1 or claim 2, wherein performing the semantic segmentation on the second depth image to be reconstructed comprises:

   obtaining a feature map of the RGB image and a feature map of the second depth image to be reconstructed by extracting features from the RGB image and extracting features from the second depth image to be reconstructed;
   obtaining a fused feature map by fusing the feature map of the RGB image and the feature map of the second depth image to be reconstructed at a plurality of levels;
   determining the area of the target object and the area of the non-target object based on the fused feature map.

4. The method according to claim 3, wherein preprocessing the first depth image to be reconstructed comprises one or more of the following:

   adjusting a pixel value range of the first depth image to be reconstructed according to a color scale range of the RGB image;
   removing noise pixels from the first depth image to be reconstructed according to a depth range of a depth camera, which is used to obtain the first depth image to be reconstructed;
   inpainting the first depth image to be reconstructed using an interpolation method.

5. The method according to claim 3, wherein the area of the target object and the area of the non-target object are obtained by inputting the second depth image to be reconstructed and the RGB image into a pre-trained semantic segmentation model, wherein the pre-trained semantic segmentation model is obtained by:

   acquiring a sample image, which comprises a depth image and an RGB image corresponding to the depth image, the depth image comprising a label indicating an area of a target object and an area of a non-target object in the depth image;
   inputting the sample image into an initial model that is preset, and obtaining the pre-trained semantic segmentation model by adjusting model parameters based on a difference between a prediction result output by the initial model and the label.

6. The method according to claim 5, wherein obtaining the pre-trained semantic segmentation model comprises:

after training the initial model, determining weights of channels of the initial model based on the model parameters of the initial model; and
obtaining the pre-trained semantic segmentation model by deleting a designated channel of the initial model according to the weights of the channels.

7. The method according to claim 6, wherein obtaining the pre-trained semantic segmentation model comprises: obtaining the pre-trained semantic segmentation model by fine-tuning the model parameters of the initial model after deleting the designated channel.

8. The method according to claim 5, the pre-trained semantic segmentation model is a model accelerated by a TensorRT.

9. A three-dimensional reconstruction apparatus, **characterized in that** the three-dimensional reconstruction apparatus comprises:

an acquisition unit, being configured to obtain a first depth image to be reconstructed of a target scene and a red-green-blue (RGB) image corresponding to the first depth image to be reconstructed;
a preprocessing unit, being configured to obtain a second depth image to be reconstructed by preprocessing the first depth image to be reconstructed;
a semantic segmentation unit, being configured to determine an area of a target object and an area of a non-target object in the second depth image to be reconstructed by performing a semantic segmentation on the second depth image to be reconstructed based on the second depth image to be reconstructed and the RGB image;
a processing unit, being configured to remove the area of the non-target object in the second depth image to be reconstructed by processing the second depth image to be reconstructed;
a three-dimensional reconstruction unit, being configured to obtain a three-dimensional model of the target object by performing a three-dimensional reconstruction using the second depth image to be reconstructed that has been processed.

10. An electronic device, **characterized in that** the electronic device comprises:

a processor;
a storage device, being configured for storing instructions executable by the processor;
wherein the processor is configured to implement the method according to any one of claims 1 to 8.

11. A computer-readable storage medium having a computer program stored thereon, **characterized in that** when the computer program is executed by a processor, steps of the method according to any one of claims 1 to 8 are implemented.

**Fig. 1**

Obtain a first depth image to be reconstructed of a target scene and an RGB image corresponding to the first depth image to be reconstructed — S201

Obtain a second depth image to be reconstructed by preprocessing the first depth image to be reconstructed — S202

Determine an area of a target object and an area of a non-target object in the second depth image to be reconstructed by performing a semantic segmentation on the second depth image to be reconstructed based on the second depth image to be reconstructed and the RGB image — S203

Process the second depth image to be reconstructed to remove the area of the non-target object in the second depth image to be reconstructed — S204

Perform a three-dimensional reconstruction using the second depth image to be reconstructed that has been processed to obtain a three-dimensional model of the target object — S205

**Fig. 2**

**Fig. 3**

**Fig. 4**

Obtain a sample image, the sample image includes a depth image and an RGB image corresponding to the depth image, where the depth image includes a label for indicating an area of a target object and an area of a non-target object in the depth image ⎯ S501

Input the sample image into an initial model that is preset, and adjust model parameters based on a difference between a prediction result output by the initial model and the label to obtain a pre-trained semantic segmentation model ⎯ S502

**Fig. 5**

**Fig. 6**

**Fig. 7**

**Fig. 8**

## INTERNATIONAL SEARCH REPORT

| International application No. |
|---|
| **PCT/CN2023/135137** |

**A.  CLASSIFICATION OF SUBJECT MATTER**

G06T 17/00(2006.01)i;  G06V 10/26(2022.01)n;  G06V 10/30(2022.01)n;  G06V 10/80(2022.01)n;  G06V 10/82(2022.01)n

According to International Patent Classification (IPC) or to both national classification and IPC

**B.  FIELDS SEARCHED**

Minimum documentation searched (classification system followed by classification symbols)

IPC:  G06T G06V

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; ENTXT; IEEE: 三维, 3D, 重建, 深度图, RGB, 对象, 区域, 预处理, 语义分割, three-dimensional, reconstruction, depth image, object, area, pretreatment, semantic segment

**C.  DOCUMENTS CONSIDERED TO BE RELEVANT**

| Category* | Citation of document, with indication, where appropriate, of the relevant passages | Relevant to claim No. |
|---|---|---|
| PX | CN 115953534 A (SHINING 3D TECH. CO., LTD.) 11 April 2023 (2023-04-11) claims 1-11, description, paragraphs [0001]-[0094], and figures 1-8 | 1-11 |
| X | CN 109410318 A (SHINING 3D TECHNOLOGY CO., LTD.) 01 March 2019 (2019-03-01) description, paragraphs [0001]-[0155] | 1-11 |
| A | CN 108805979 A (TSINGHUA-BERKELEY SHENZHEN INSTITUTE PREPARATION OFFICE) 13 November 2018 (2018-11-13) entire document | 1-11 |
| A | CN 113570701 A (JUHAOKAN TECHNOLOGY CO., LTD.) 29 October 2021 (2021-10-29) entire document | 1-11 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 February 2024** | **16 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/135137**

| Patent document cited in search report | | | Publication date (day/month/year) | Patent family member(s) | | | Publication date (day/month/year) |
|---|---|---|---|---|---|---|---|
| CN | 115953534 | A | 11 April 2023 | None | | | |
| CN | 109410318 | A | 01 March 2019 | KR | 20210068077 | A | 08 June 2021 |
| | | | | JP | 2022501737 | A | 06 January 2022 |
| | | | | EP | 3859685 | A1 | 04 August 2021 |
| | | | | EP | 3859685 | A4 | 08 December 2021 |
| | | | | AU | 2019345828 | A1 | 13 May 2021 |
| | | | | AU | 2019345828 | B2 | 13 October 2022 |
| | | | | WO | 2020063986 | A1 | 02 April 2020 |
| | | | | CA | 3114650 | A1 | 02 April 2020 |
| | | | | CA | 3114650 | C | 22 August 2023 |
| | | | | US | 2021375043 | A1 | 02 December 2021 |
| | | | | CN | 109410318 | B | 08 September 2020 |
| | | | | IN | 202147018588 | A | 30 April 2021 |
| CN | 108805979 | A | 13 November 2018 | WO | 2019238114 | A1 | 19 December 2019 |
| | | | | CN | 108805979 | B | 29 June 2021 |
| CN | 113570701 | A | 29 October 2021 | CN | 113570701 | B | 24 October 2023 |

Form PCT/ISA/210 (patent family annex) (July 2022)